# EUROPÄISCHE PATENTSCHRIFT

(11) **EP 0 912 381 B1**
(45) Veröffentlichungstag und Bekanntmachung des Hinweises auf die Patenterteilung: **27.09.2000**
(21) Anmeldenummer: 97921769.2
(22) Anmeldetag: 25.04.1997
(51) Int. Cl.: B60T 8/32

(54) **VERFAHREN ZUR VERBESSERUNG DES REGELVERHALTENS EINES ABS**
METHOD OF IMPROVING ABS CONTROL BEHAVIOUR
PROCEDE POUR AMELIORER LE COMPORTEMENT EN REGULATION D'UN SYSTEME ANTIBLOCAGE

(30) Priorität: 18.07.1996 DE 19628981
(43) Veröffentlichungstag der Anmeldung: 06.05.1999
(73) Patentinhaber: Continental Teves AG & Co. oHG, 60488 Frankfurt (DE)
(72) Erfinder: BATISTIC, Ivica, D-60385 Frankfurt am Main (DE)
(74) Vertreter: Blum, Klaus-Dieter
(86) Internationale Anmeldenummer: EP9702136
(87) Internationale Veröffentlichungsnummer: WO9803384

(56) Entgegenhaltungen:
- EP-A- 0 462 635
- EP-A- 0 522 615
- EP-A- 0 552 456
- DE-A- 2 119 590
- DE-A- 3 413 738
- DE-A- 4 112 284

## Beschreibung

Die Erfindung bezieht sich auf ein Verfahren zur Verbesserung des Regelverhaltens eines Antiblockiersystems, insbesondere zur Verbesserung der Lenkbarkeit des Fahrzeugs und der Fahrstabilität während einer Kurvenfahrt, bei dem aus dem Drehverhalten der Fahrzeugräder eine Fahrzeug-Referenzgeschwindigkeit abgeleitet und Kriterien zum Erkennen einer Kurvenfahrtsituation und der Kurvenrichtung gewonnen werden, bei dem bei Kurvenfahrterkennung anstelle des Standard-Regelmodus ein Sonder-bzw. Kurven-Regelmodus in Funktion gesetzt wird, der bereits im Teilbremsbereich eine Verringerung des Bremsdrucks an dem kurveninneren Vorderrad und/oder kurveninneren Hinterrad hervorruft.

Bei einer Kurvenfahrterkennung wird bei einem Regelverfahren der hier genannten Art durch die Druckentlastung der kurveninneren Räder ein die Kurvenfahrt ausgleichendes, stabilisierendes Giermoment um die Hochachse des Fahrzeugs erzeugt. Der Bremsdruck an den kurvenäußeren Rädern wird, wenn die Regelung während einer Teilbremsung einsetzt, konstant gehalten oder erhöht sich automatisch durch die Unterbindung eines weiteren Bremsdruckaufbaus an dem oder an den kurveninneren Rädern.

Aus der DE 34 13 738 C2 ist bereits ein Blockierschutzregelungssystem mit einer Kurvenfahrterkennungsschaltung, die ebenfalls auf der Radschlupfmessung beruht, bekannt. Zur Kurvenfahrterkennung werden die Schlupfwerte an den Rädern einer Fahrzeugseite addiert, mit der Schlupfsumme der Räder der anderen Fahrzeugseite verglichen und ein Kurvenfahrterkennungssignal erzeugt, sobald die Differenz der Schlupfsummen einen vorgegebenen Grenzwert überschreitet. Bei Kurvenfahrterkennung werden dann Auswahlkriterien, wie "Select-low" oder "Select-high", nach denen der Druckverlauf in den einzelnen Bremsdruckregelkanälen dieser Bremsanlage geregelt wird, und Grenzwerte für das Wirksamwerden dieser Auswahlkritierien variiert. Auf diese Weise soll die Regelung den unterschiedlichen Bedingungen während einer Geradeausfahrt und während einer Kurvenfahrt angepaßt werden.

Aus der DE 21 19 590 A1 ist es bekannt, ein Kurvenfahrterkennungssignal mit Hilfe eines Querbeschleunigungsmeßgerätes, wie eines Quecksilberschalters, zu gewinnen.

Ferner ist es bereits bekannt, die Funktionen eines ABS zu erweitern, indem das System zum Verbessern der Fahrstabilität bzw. Bremsstabilität in der Kurve eingesetzt wird. Hierzu wird während einer Kurvenfahrt und einer Teilbremsung, d.h. bei einem Bremsvorgang, bei dem die ABS-Ansprechschwellen nicht erreicht werden, durch eine gezielte Verzögerung des Bremsdruckaufbaus an den kurveninneren Rädern im Vergleich zum Bremsdruck an den kurvenäußeren Rädern ein stabilisierendes Moment um die Hochachse des Fahrzeugs hervorgerufen ("Bremsanlage und Schlupf-Regelsystem der neuen 7er-Reihe von BMW", ATZ 97(1995),Seiten 8-15 und "Bremsanlage und Schlupf-Regelungssysteme der neuen Baureihe 5 von BMW", ATZ 98(1996) Seiten 188-194). Die Information über den aktuellen Lenkwinkel wird, wenn kein Lenkwinkelsensor verwendet wird, aus der Querbeschleunigung abgeleitet, die wiederum aus den Radsensorsignalen berechnet wird.

Der Erfindung liegt nun die Aufgabe zugrunde, bei einem Verfahren der eingangs genannten Art sicherzustellen, daß in allen Fällen, auch in Situationen, die durch den Sonder-Regelmodus nachteilig beeinflußt werden könnten, ein möglichst kurzer Bremsweg erreicht werden kann. Es soll vermieden werden, daß durch den Sonder-Regelmodus, der prinzipbedingt zu einer Reduzierung der Bremskraft an den kurveninneren Rädern führt, eine Verlängerung des erforderlichen Bremsweges eintreten kann.

Es hat sich gezeigt, daß diese Aufgabe durch die im Anspruch 1 beschriebenen Maßnahmen gelöst werden kann. Die Besonderheit des erfindungsgemäßen Verfahrens besteht also darin, daß während eines Bremsvorgangs und aktiviertem Sonder-Regelmodus bei Übergang von der Kurvenfahrt in eine Geradeausfahrt oder bei Richtungswechsel der Kurve der Bremsdruck am kurveninneren Vorderrad und/oder kurveninneren Hinterrad ein durch den Sonder-Regelmodus hervorgerufenes Druckdefizit durch einen Sonder-Druckaufbaumodus ausgeglichen wird.

Bei Bremsanlagen der hier in Rede stehenden Art wird der Druckverlauf in den Radbremsen im Regelfall durch pulsweises Ansteuern von elektrisch betätigbaren, in den Druckmittelwegen eingefügten Hydraulikventilen herbeigeführt. Nach einem vorteilhaften Ausführungsbeispiel der Erfindung, das für solche Bremsanlagen geeignet ist, wird im Sonder-Druckaufbaumodus die in einem Standard-Druckaufbaumodus vorgegebene Druckaufbau-Pulsreihe durch Kürzen der Pulspausenzeiten zwischen den Bremsdruckeinsteuerpulsen komprimiert.

Durch die erfindungsgemäß vorgeschlagene, sehr einfache Maßnahme wird in zuverlässiger Weise verhindert, daß das durch die Sonder-Regelung hervorgerufene Druckdefizit bei einem "Verlassen" der Kurvenfahrtsituation oder Kurvenrichtungswechsel zu einer unerwünschten Bremswegverlängerung führen kann.

Weitere Einzelheiten, Vorteile und Anwendungsmöglichkeiten der Erfindung gehen aus der folgenden Beschreibung eines Ausführungsbeispiels anhand des beigefügten Flow-Charts hervor.

Dieses Flow-Chart gibt gewissermaßen einen Ausschnitt aus dem Regelungsverlauf oder Programmablauf eines Antiblockiersystems wieder, bei dem das erfindungsgemäße Verfahren verwirklicht ist.

Nach dem START des dargestellten (Unter)Programms wird in einem ersten Schritt, Verzweigung 1, festgestellt, ob eine Kurvenbremsung, d.h. eine Teilbremsung (d.h. Bremsvorgang ohne Einsatz der ABS-Regelung) oder eine ABS-Bremsung während der Kurvenfahrt des Fahrzeugs momentan gegeben ist. Ist dies der Fall (J), wird, symbolisiert durch die Operation 2, ein Sonder-Regelmodus, der auch als Kurven-Regelmodus bezeichnet wird, gestartet oder fortgesetzt.

Liegt zum Zeitpunkt der Abfrage 1 keine Kurvenbremsung vor (Kurvenbremsung: Nein), wird durch Schritt 3 festgestellt, ob unmittelbar zuvor Kurvenerkennung vorlag. Wenn Ja, wird erfindungsgemäß, symbolisiert durch einen Funktionsschritt 4, ein Sonder-Druckaufbaumodus eingeleitet. Durch diesen Sonder-Druckaufbaumodus wird sichergestellt, daß ein eventuelles Druckdefizit am "unterbremsten", kurveninneren Rad sehr schnell ausgeglichen wird; der Druckaufbau in der Radbremse dieses Rades erfolgt mit erhöhtem Druckaufbaugradienten im Vergleich zu einem Standard-Druckaufbaumodus. Bei Bremsanlagen mit pulsweise angesteuerten Hydraulikventilen, insbesondere Einlaßventilen, - eine solche Arbeitsweise bzw. ein solcher Aufbau ist bei heutigen Antiblockiersystemen weit verbreitet - , wird im Vergleich zum Standard-Druckaufbaumodus die Druckaufbau-Pulsreihe durch Kürzen der Pulspausenzeiten komprimiert.

Die Erfindung beruht auf folgenden Überlegungen: Während einer Kurvenbremsung im Sonder- oder Kurven-Regelmodus wird, um die Fahrstabilität zu erhöhen und die Lenkbarkeit des Fahrzeugs zu verbessern, an dem kurveninneren Vorderrad und/oder Hinterrad der Bremsdruck auf einem niedrigeren Niveau gehalten bzw. eine ABS-Regelung nach deutlich empfindlicheren Regelungs-Eintrittsschwellen im Vergleich zur Bremsung bei Geradeausfahrt abgewickelt.

Gleichzeitig wird in einer solchen Kurvenfahrtsituation an den kurvenäußeren Rädern, insbesondere am kurvenäußeren Vorderrad, der Bremsdruck erhöht; bei einer ABS-Regelung werden in dieser Situation die Regel-Eintrittsschwellen erhöht, damit die Regelung im Vergleich zu einer Geradeausfahrt unempfindlicher reagiert.

Wechselt nun während eines Sonder- bzw. Kurven-Regelmodus die Kurvenrichtung oder geht das Fahrzeug in eine Geradeausfahrt über, so tritt an dem bis zu diesem Moment kurveninneren Vorderrad und/oder Hinterrad ein Druckdefizit und am (bisher) kurvenäußeren Vorderrad und/oder Hinterrad ein Drucküberschuß auf.

Der Drucküberschuß wird automatisch durch eine aktive ABS-Regelung ausgeglichen. Das Druckdefizit würde grundsätzlich auch durch die aktive ABS-Regelung ausgeglichen werden, jedoch erst nach einer relativ langen Zeitspanne. Druckaufbaureihen bis zur Beendigung der Aktivität eines hydraulischen Einlaßventils in einem Regelkanal dauern typischerweise 700 - 800 ms oder erreichen gar 1 Sekunde. Es leuchtet ein, daß während dieser Zeitspannen einerseits die Bremsleistung eingeschränkt ist, andererseits, falls eine Wechselkurve (Spurwechsel), d.h. Wechsel der Kurvenrichtung stattfinden sollte, das zuvor kurveninnere Vorderrad und/oder Hinterrad zum kurvenäußeren Rad wird und nun zur Fahrstabilität, Lenkbarkeit und Abbremsung beitragen soll. Beide Funktionen kann das nun kurvenäußere Rad nur dann erfüllen, wenn es ausreichend mit Bremsdruck versorgt wird. Dieses Ziel wird erfindungsgemäß, wie zuvor beschrieben, durch den Sonder-Druckaufbaumodus, nämlich durch die Komprimierung der Druckaufbaupulse, erfüllt. Dadurch wird ein schneller Ausgleich des vorhandenen Druckdefizits und eine optimale Fahrstabilität erreicht.

Eine erhebliche Änderung des Kurvenradius kann zu einer vergleichbaren Situation führen.

Wurde das Verlassen der bisherigen Kurvenbahn in einer bereits aktivierten Standard-Druckaufbaureihe erkannt, so wird diesem Vorgang ab dem Zeitpunkt der Erkennung der besonderen Situation durch Übergang in den Sonder-Druckaufbaumodus und dadurch in die komprimierte Druckaufbau-Pulsreihe Rechnung getragen. Der Start der komprimierten Druckaufbau-Pulsreihe wird in diesem Fall z.B. auf die Hälfte der bereits eingesteuerten Reihe gelegt.

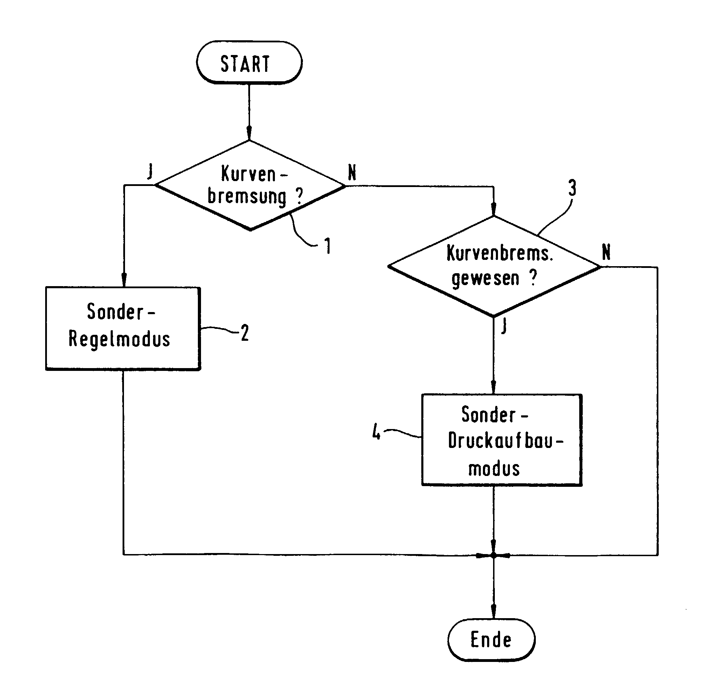

## Patentansprüche

1. Verfahren zur Verbesserung des Regelverhaltens eines Antiblockiersystems, insbesondere zur Verbesserung der Lenkbarkeit des Fahrzeugs und der Fahrstabilität während einer Kurvenfahrt, bei dem aus dem Drehverhalten der Fahrzeugräder eine Fahrzeug-Referenzgeschwindigkeit abgeleitet und Kriterien zum Erkennen einer Kurvenfahrtsituation und der Kurvenrichtung gewonnen werden, bei dem bei Kurvenfahrterkennung anstelle des Standard-Regelmodus ein Sonder- bzw. Kurven-Regelmodus in Funktion gesetzt wird, der bereits im Teilbremsbereich eine Verringerung des Bremsdrucks an dem kurveninneren Vorderrad und/oder kurveninneren Hinterrad hervorruft, dadurch **gekennzeichnet**, daß während eines Bremsvorgangs und aktiviertem Sonder-Regelmodus bei Übergang von der Kurvenfahrt in die Geradeausfahrt oder bei Richtungswechsel der Kurve der Bremsdruck am kurveninneren Vorderrad und/oder kurveninneren Hinterrad ein durch den Sonder-Regelmodus hervorgerufenes Druckdefizit am kurveninneren Rad durch einen Sonder-Druckaufbaumodus, der einen Druckaufbau in der Radbremse dieses Rades mit erhöhtem Druckaufbaugradienten im Vergleich zu einem Standard-Druckaufbaumodus herbeiführt, ausgeglichen wird.

2. Verfahren nach Anspruch 1, bei dem der Druckverlauf in den Radbremsen im Regelfall durch pulsweises Ansteuern von elektrisch betätigbaren, in den Druckmittelwegen eingefügten Hydraulikventilen erfolgt, dadurch **gekennzeichnet**, daß im Sonder-Druckaufbaumodus die im Standard-Druckaufbaumodus vorgegebene Druckaufbaupulsreihe durch Kürzen der Pulspausenzeiten komprimiert wird.

## Claims

1. A method of improving the control behavior of an antilocking system, in particular, of improving the steerability of the automotive vehicle and the driving stability when driving around a curve, wherein a vehicle reference speed is derived from the rotating behavior of the vehicle wheels and criteria are obtained for identifying a cornering situation and the curve direction, and once a cornering situation is identified, the standard control mode is replaced by a special or curve control mode which already in the partial deceleration range causes a reduction in braking pressure on the front wheel at the inner side of the curve and/or on the rear wheel at the inner side of the curve,
**characterized** in that during a braking operation and with the special control mode activated, in the transition from cornering to straight travel or with changing curve directions, the braking pressure on the front wheel at the inner side of a curve and/or the rear wheel at the inner side of a curve or a pressure deficit caused by the special control mode is compensated by a special pressure increase mode which causes pressure increase in the wheel brake of this wheel with an inceased pressure increase gradient in comparison to a standard pressure increase mode.

2. A method as claimed in claim 1, wherein the pressure variation in the wheel brakes occurs in control operations by pulsewise actuation of electrically operable hydraulic valves which are inserted into the pressure fluid conduits, **characterized** in that the pressure increase pulse row which is predetermined in the standard pressure increase mode is compressed in the special pressure increase mode by shortening the pulse-pause times.

## Revendications

1. Procédé d'amélioration du comportement de régulation d'un système antiblocage des roues, en particulier pour l'amélioration de la dirigeabilité du véhicule et de la stabilité de conduite pendant un passage dans un virage, où une vitesse de référence du véhicule est dérivée, et des critères de reconnaissance d'une situation de marche en virage et de la direction du virage sont obtenus, à partir du comportement de rotation des roues du véhicule, et où, en cas de reconnaissance d'un passage dans un virage, un mode de régulation spécial ou mode de régulation en virage est mis en oeuvre à la place du mode de régulation standard, ce mode spécial provoquant une diminution de la pression de freinage au niveau de la roue avant intérieure et/ou de la roue arrière intérieure, dans le virage, dès la plage de freinage partiel,
caractérisé en ce que, pendant une opération de freinage, et lorsque le mode de régulation spécial a été activé, lors d'un passage d'une marche en virage vers une marche en ligne droite ou lors d'un changement de direction du virage, la pression de freinage régnant à la roue avant intérieure et/ou à la roue arrière intérieure, dans le virage, est pilotée de manière qu'un déficit de pression, provoqué par le mode de régulation spécial au niveau de la roue intérieure, soit compensé par un mode spécial d'augmentation de la pression qui engendre une augmentation de la pression dans le frein de roue de cette roue suivant un gradient d'augmentation de pression plus raide, comparativement à un mode d'augmentation de pression standard.

2. Procédé selon la revendication 1, où l'évolution de la pression régnant dans les freins de roue est pilotée, en cas de régulation, par une commande cadencée de soupapes hydrauliques à commande électrique, insérées dans les chemins d'écoulement de fluide de pression,
caractérisé en ce qu'en mode spécial d'augmentation de la pression, la séquence d'impulsions d'augmentation de la pression prédéfinie dans le mode d'augmentation de pression standard, est comprimée par un raccourcissement des périodes de repos entre impulsions.
